# EUROPEAN PATENT APPLICATION

(11) **EP 2 765 738 A1**
(43) Date of publication of application: **13.08.2014**
(21) Application number: 12847212.3
(22) Date of filing: 19.10.2012
(51) Int. Cl.: H04L 12/24

(54) **METHOD AND SYSTEM FOR AUTOMATIC SWITCHING**

(30) Priority: 10.11.2011 CN 201110355242
(71) Applicant: ZTE Corporation, Guangdong Province 518057 (CN)
(72) Inventor: LIU, Guoman, Shenzhen Guangdong 518057 (CN); LUO, Bin, Shenzhen Guangdong 518057 (CN); ZHANG, Yuanyuan, Shenzhen Guangdong 518057 (CN)
(74) Representative: Zerbi, Guido Maria
(86) International application number: PCT/CN2012/083205
(87) International publication number: WO 2013/067883

(57) **Abstract**

A method for automatic switching comprises: judging a status of a working entity when a node on a protection entity detects a failure of a link or node resources or is notified by other nodes of the failure of the link or node resources, and/or protection resources are occupied by higher priority services, and/or an external command is received, and then switching to the working entity when the status of the working entity meets a predetermined condition. A system for automatic switching is also provided in the embodiment of the present document. The embodiments of the present document implement monitoring for the protection entity.

## Description

### Technical Field

The present document relates to a protection field, and in particular, to a method and system for automatic switching.

### Background of the Related Art

As to a current automatic switching process between a working entity and a protection entity, whether the automatic switching occurs is judged (such as, when there is a failure in the working entity and there is no failure in the protection entity, then it is to switch to the protection entity to perform the service transmission; when the failure disappears on the working entity, it will be returned to the working entity automatically to perform the transmission) mainly according to whether a Signal Failure (SF) or a Signal Degrade (SD) situation occurs on the working path, while it is not indicated how to deal with when there is a failure in the protection entity and/or its protection resources are occupied by higher priority services and/or an external command, such as a locking command, is received, and there is no clear realization scheme.

### Summary of the Invention

The technical problem required to be solved by the present document is to provide a method and system for automatic switching, to improve the utilization rate of shared resources.

In order to solve the above-mentioned problem, the present document provides a method for automatic switching, comprising:
judging a status of a working entity when a node on a protection entity detects a failure of a link or node resources or is notified by other nodes of the failure of the link or node resources, and/or, protection resources are occupied by higher priority services, and/or, an external command is received, and then switching to the working entity when the status of the working entity meets a predetermined condition.

Preferably, the above-mentioned method can be characterized in that the status of the working entity meeting the predetermined condition comprises that:
the status of the working entity is better than a status of the protection entity, or, a status priority of the protection entity is higher than a status priority of the working entity, or, the status of the working entity is normal.

Preferably, the above-mentioned method can further be characterized in that the method further comprises: judging a status of the protection entity when a node on the working entity detects the failure of the link or the node resources or is notified by other nodes of the failure of the link or node resources, and/or, an external command is received, and then switching to the protection entity when the status of the protection entity meets a second predetermined condition.

Preferably, the above-mentioned method can further be characterized in that the status of the protection entity meeting the second predetermined condition comprises that:
the status of the protection entity is better than the status of the working entity, or, a status priority of the working entity is higher than a status priority of the protection entity, or, the status of the protection entity is normal.

Preferably, the above-mentioned method can further be characterized in that the method further comprises: notifying other nodes when the node on the protection entity or the working entity detects a status change or is notified of a status change, wherein the status change comprises one or a combination of the following:
a failure of a link or node resources; resources being occupied by other higher priority services; a failure of a link or node resources clear; other higher priority services releasing the occupied resources; and receiving the external command.

Preferably, the above-mentioned method can further be characterized in that notifying other nodes comprises:
notifying other nodes on a same protection entity or working entity.

Preferably, the above-mentioned method can further be characterized in that the method further comprises: when an intermediate node on the protection entity detects a status change occurring on a link or a node or is notified by other nodes of a status change, releasing or occupying corresponding resources, to make the resources become available or unavailable.

Preferably, the above-mentioned method can further be characterized in that the external command comprises a resource locking command, and/or, a resource unlocking command.

The present document further provides a system for automatic switching, comprising at least one working entity and one protection entity; wherein, the working entity and the protection entity comprise a plurality of nodes; wherein:
the nodes on the protection entity are configured to: judge a status of the working entity when detecting a failure of a link or node resources or being notified by other nodes of the failure of the link or node resources, and/or, protection resources are occupied by higher priority services, and/or, an external command is received, and switch to the working entity when the status of the working entity meets a predetermined condition.

Preferably, the above-mentioned system can further be characterized in that meeting the predetermined condition comprises that:
the status of the working entity is better than a status of the protection entity, or, a status priority of the protection entity is higher than a status priority of the working entity, or, the status of the working entity is normal.

Preferably, the above-mentioned system can further be characterized in that the nodes on the working entity are configured to: judge the status of the protection entity when detecting the failure of the link or the node resources or being notified by other nodes of the failure of the link or node resources, and/or, the external command is received, and switch to the protection entity when the status of the protection entity meets a second predetermined condition.

Preferably, the above-mentioned system can further be characterized in that the status of the protection entity meeting the second predetermined condition comprises:
the status of the protection entity is better than the status of the working entity, or, a status priority of the working entity is higher than a status priority of the protection entity, or, the status of the protection entity is normal.

Preferably, the above-mentioned system can further be characterized in that the nodes on the protection entity or the working entity are further configured to: notify other nodes when detecting a status change or being notified of a status change, wherein the status change comprises one or a combination of the following:
a failure of a link or node resources; resources being occupied by other higher priority services; a failure of a link or node resources clear; other higher priority services releasing the occupied resources; and receiving the external command.

Preferably, the above-mentioned system can further be characterized in that notifying other nodes comprises:
notifying other nodes on a same protection entity or working entity.

Preferably, the above-mentioned system can further be characterized in that an intermediate node on the protection entity is further configured to: release or occupy corresponding resources when detecting a status change occurring on a link or a node or is notified by other nodes of a status change, to make the resources become available or unavailable.

Preferably, the above-mentioned system can further be characterized in that the external command comprises a resource locking command, and/or, a resource unlocking command.

By adopting the method and system described by the embodiment of the present document, compared with the related art, an automatic switching operation is performed correctly after the SF or SD occurs in the node or the link resources on the protection entity or its shared resources are occupied by other higher priority service and/or the resources are locked by the external command, so as to utilize the shared resources easily.

### Brief Description of Drawings

FIG. 1 is a relationship diagram of modules in an embodiment of the present document;
FIG. 2 is a diagram of a shared protection.
FIG. 3 is a diagram of automatic switching when there is a failure in a working entity;
FIG. 4 is a diagram of an occupation and automatic recovery of higher priority services;
FIG. 5 is a diagram of releasing shared resources;
FIG. 6 is a flow chart of automatic switching.

### Preferred Embodiments of the Invention

The embodiment of the present document is described in detail with reference to the accompanying drawings hereinafter. It should be illustrated that, in the case of not conflicting, the embodiments in the present application and features in these embodiments can be combined with each other arbitrarily.

The embodiment of the present document provides a method for automatic switching, including:
judging a status of a working entity when a node on a protection entity detects a failure of a link or node resources or is notified by other nodes of the failure of the link or node resources, and/or, protection resources are occupied by higher priority services, and/or, an external command, such as a resource locking command, is received, and then switching to the working entity when the status of the working entity meets a predetermined condition.

Wherein, the status of the working entity meeting the predetermined condition includes:
the status of the working entity is better than a status of the protection entity, or, a status priority of the protection entity is higher than a status priority of the working entity, or, the status of the working entity is normal. Wherein, different failure types are divided into different status priorities, the higher the priority, the worse the status, for example, in the existing standard, SF is greater than SD, if SD occurs in the working entity, and SF occurs in the protection entity, then it should be switched to the working entity automatically for transmission.

Wherein, the method further includes: judging a status of the protection entity when a node on the working entity detects the failure of the link or the node resources or is notified by other nodes of the failure of the link or node resources, and/or, an external command, such as a resource locking command, is received, and then switching to the protection entity when the status of the protection entity meets a second predetermined condition.

The status of the protection entity meeting the second predetermined condition includes:
the status of the protection entity is better than the status of the working entity, or, a status priority of the working entity is higher than a status priority of the protection entity, or, the status of the protection entity is normal.

Wherein, the method further includes: notifying other nodes when the node on the protection entity or the working entity detects a status change or is notified of a status change, and the status change includes one or a combination of the following:
a failure of a link or node resources; resources being occupied by other higher priority services; a failure of a link or node resources clear; other higher priority services releasing the occupied resources; and receiving the external command.

The above-mentioned external command includes a resource locking command, and/or, a resource unlocking command.

Wherein, notifying other nodes includes:
notifying other nodes on a same protection entity or working entity.

Wherein, the method further includes, when an intermediate node on the protection entity detects a status change occurring on a link or a node or is notified by other nodes of the status change of the link or node resources, releasing or occupying corresponding resources, to make the resources become available or unavailable.

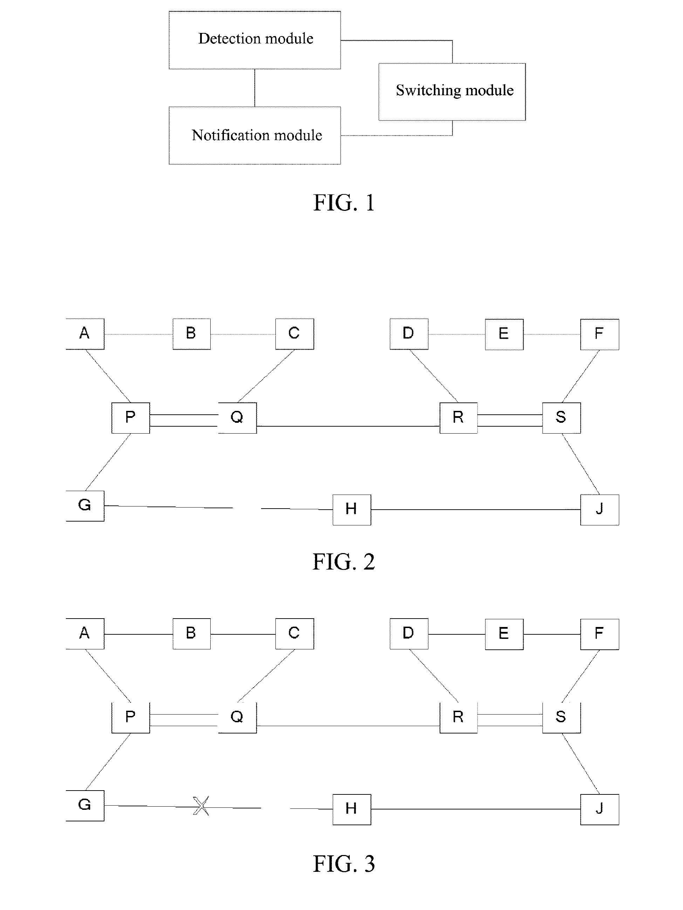

As shown in FIG. 1, the node block diagram provided for the embodiment of the present document mainly includes the following three modules:
a detection module: used for detecting whether there is a failure occurring in the link or the node resources on the working entity or the protection entity (such as: SF or SD, etc.) or whether the shared resources are occupied by other higher priority services through a detection mechanism (such as overhead bytes or detection messages, etc.) to become available or unavailable, and, becoming available or unavailable when being notified of the status change; and/or, also becoming available or unavailable when receiving an external locking or unlocking command;
a notification module: used for notifying other nodes on the working entity or the protection entity through overhead bytes or notification messages after the detection module detects the status change occurring in the link and the node resources on the working entity or the protection entity; and
a switching module: used for triggering corresponding automatic switching operations according to a detected result of the status change of the node or the link on the protection entity or the working entity, such as switching from the working entity to the protection entity, or recovering from the protection entity to the working entity. The specific switching mode refers to the method embodiment.

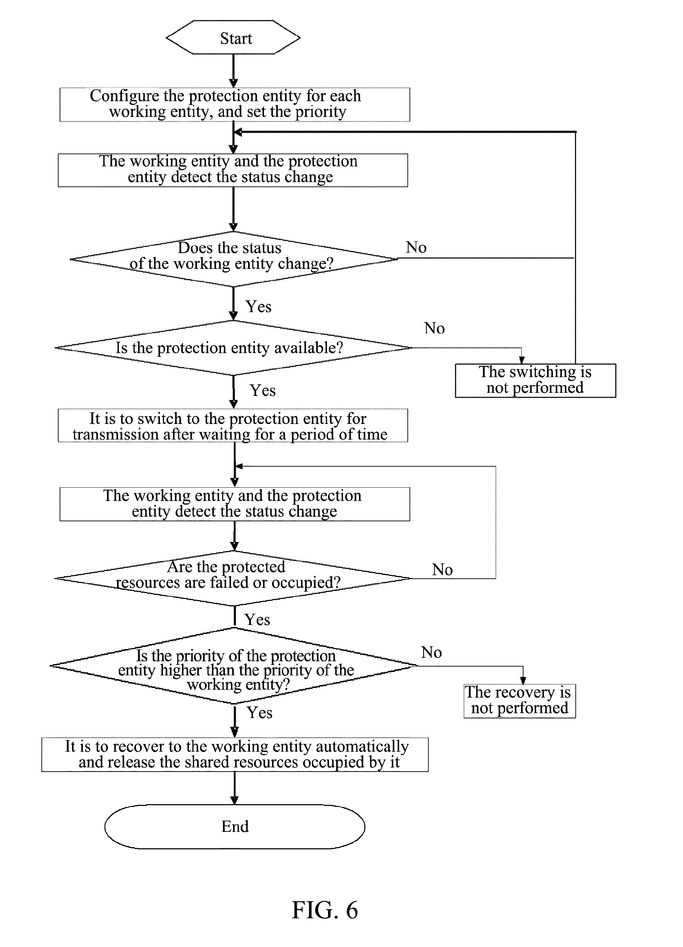

The method for automatic switching provided by the embodiment of the present document includes:
1. If there are protection entities corresponding to the 3 working entities (A-B-C, D-E-F, G-H-J) now sharing the same section of link P-Q and R-S, whether there is SF and/or SD failure in the link or the node resources on the working entity and the protection entity and/or its resource are occupied by other higher priority services and/or the external command is received is detected by the failure detection mechanism at first;
2. when it is detected that there is a failure in the link or the node on the working entity or the protection entity or the protection resources are occupied by other higher priority services, then the node detecting the status change including the upper end node or the intermediate node on the protection entity generates the notification message to notify other nodes; its notification message can be transmitted to a correspondent node directly through the protection entity, or transmitted through along the protection entity direction hop by hop to notify other intermediate nodes or end nodes on the protection entity; or the notification information message is transmitted to other intermediate nodes or end nodes by a second path;
3. when the two end nodes receive the notification message of the status change or detect the status change directly, then the automatic switching or recovering occurs; if there is the failure (such as SF or SD) on the working entity or the resources are occupied by other higher priority services and/or the external locking command is received, then it is to switch to the protection entity for transmission when the resources on the protection entity are available; or when there is the failure (such as SF or SD) occurring in the node or the link resources on the protection entity or the protection resources are occupied by other higher priority services and/or the external locking command is received, then when the current status of the working entity is better than that of the protection entity or the status priority of the working entity is lower than the status priority of the protection entity, it is to recover and switch to the working entity automatically for transmission after waiting for a period of time, as shown in FIG. 6;
4. as to the intermediate nodes on the protection entity, when detecting the status change occurring on the link or the node or being notified by other nodes of the status change, then it releases or occupies corresponding resources to make the resources become available or unavailable.

As to the specific implementation procedure of automatic switching or recovering, the shared protection network structure diagram as shown in FIG. 2 can be taken as an example, including the following steps.

In step 201, as shown in FIG. 2, three working entities (A-B-C, D-E-F, G-H-J) are corresponding to the protection entities (A-P-Q-C, D-R-S-F, G-P-Q-R-S-J), and their priorities are set as: D-R-S-F>G-P-Q-R-S-J>A-P-Q-C, and these three protection entities share two sections of the shared resource, P-Q and R-S.

In step 202, the failure detection on each working entity and protection entity is performed through the failure detection mechanism; when it is detected that the SF or the SD failure occurs on the working entity, as shown in FIG. 3, the failure is detected on the working entity G-H-J, and then it is judged whether its corresponding protection entity G-P-Q-R-S-J is available; if it is available, then it is to switch to the protection entity for transmission; otherwise, it is not to switch, and it is to continue to perform the failure detection on the working entity and the protection entity.

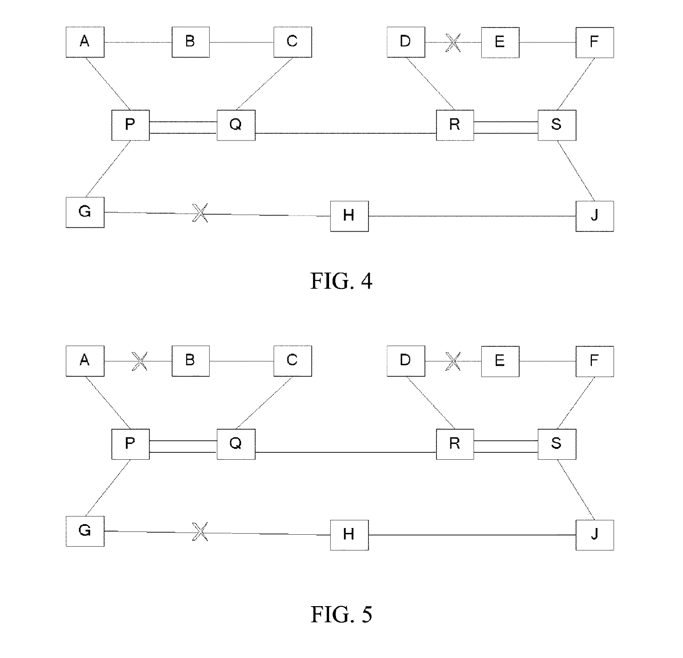

In step 203, when the protection entity G-P-Q-R-S-J transmits the protected services, it is detected that the failure occurs in the working entity D-E-F with higher priority as well, as shown in FIG. 4; because the R-S shared resources need to be occupied by the higher priority protection entity D-R-S-F, then the protection entity G-P-Q-R-S-J becomes unavailable; when the status priority of the working entity G-H-J is lower than the status priority of the protection entity, it is to recover to the working entity G-H-J automatically to transmit the services after waiting for a period of time; in addition, other shared nodes P and Q receive the information that there is the failure on the protection entity fed back by other nodes, then it releases the shared resource occupied by the protection entity G-P-Q-R-S-J, and it is to become available.

In step 204, when another working entity A-B-C with low priority detects the failure at this moment, as shown in FIG. 5, because the P-Q shared resources are already released by the protection entity G-P-Q-R-S-J and become available, then the protection entity A-P-Q-C can occupy this part of shared resources, and it is to switch to the protection entity A-P-Q-C automatically to transmits the service, which improves the utilization rate of the shared resources.

The embodiment of the present document further provides a system for automatic switching, including at least one working entity and one protection entity; wherein, the working entity and the protection entity include a plurality of nodes; wherein:
the nodes on the protection entity are configured to: judge a status of the working entity when detecting a failure of a link or node resources or is notified by other nodes of a failure of a link or node resources, and/or, protection resources are occupied by higher priority services, and/or, an external command is received, and switch to the working entity when the status of the working entity meets a predetermined condition.

Wherein, meeting the predetermined condition includes:
the status of the working entity is better than a status of the protection entity, or, a status priority of the protection entity is higher than a status priority of the working entity, or, the status of the working entity is normal.

Wherein, the nodes on the working entity are configured to: judge the status of the protection entity when detecting the failure of the link or the node resources or being notified by other nodes of the failure of the link or node resources, and/or, the external command is received, and switch to the protection entity when the status of the protection entity meets a second predetermined condition.

Wherein, the status of the protection entity meeting the second predetermined condition includes:
the status of the protection entity is better than the status of the working entity, or, a status priority of the working entity is higher than a status priority of the protection entity, or, the status of the protection entity is normal.

Wherein, the nodes on the protection entity or the working entity are further configured to: notify other nodes when detecting a status change or being notified of the status change, and the status change comprises one or a combination of the following:
a failure of a link or node resources; resources being occupied by other higher priority services; a failure of a link or node resources clear; other higher priority services releasing the occupied resources; and receiving the external command.

Wherein, notifying other nodes includes:
notifying other nodes on a same protection entity or working entity.

Wherein, an intermediate node on the protection entity is further configured to: release or occupy corresponding resources when detecting a change of status occurring on a link or a node or being notified by other nodes of the status change, to make the resources become available or unavailable.

Wherein, the external command comprises a resource locking command, and/or, a resource unlocking command.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present document is not limit to any specific form of the combination of the hardware and software.

### Industrial Applicability

By adopting the method and system described by the embodiment of the present document, compared with the related art, an automatic switching operation is performed correctly after the SF or SD occurs in the node or the link resources on the protection entity or its shared resources are occupied by other higher priority service and/or the resources are locked by the external command, so as to utilize the shared resources easily.

## Claims

1. A method for automatic switching, comprising:
judging a status of a working entity when a node on a protection entity detects or is notified by other nodes of a failure of a link or node resources, and/or, protection resources are occupied by higher priority services, and/or, an external command is received, and then switching to the working entity when the status of the working entity meets a predetermined condition.

2. The method according to claim 1, wherein, the status of the working entity meeting the predetermined condition comprises that:
the status of the working entity is better than a status of the protection entity, or, a status priority of the protection entity is higher than a status priority of the working entity, or, the status of the working entity is normal.

3. The method according to claim 1, further comprising: judging a status of the protection entity when a node on the working entity detects or is notified by other nodes of a failure of a link or node resources, and/or, an external command is received, and then switching to the protection entity when the status of the protection entity meets a second predetermined condition.

4. The method according to claim 3, wherein, the status of the protection entity meeting the second predetermined condition comprises that:
the status of the protection entity is better than the status of the working entity, or, a status priority of the working entity is higher than a status priority of the protection entity, or, the status of the protection entity is normal.

5. The method according to claim 1, further comprising: notifying other nodes when the node on the protection entity or the working entity detects or is notified of a status change, wherein the status change comprises one or a combination of the following:
a failure of a link or node resources; resources being occupied by other higher priority services; a failure of a link or node resources clear; other higher priority services releasing the occupied resources; and receiving an external command.

6. The method according to claim 5, wherein, notifying other nodes comprises:
notifying other nodes on a same protection entity or working entity.

7. The method according to claim 5, further comprising, when an intermediate node on the protection entity detects or is notified by other nodes of a status change occurring on a link or a node, releasing or occupying corresponding resources, to make the resources become available or unavailable.

8. The method according to claim 1, 3 or 5, wherein, the external command comprises a resource locking command, and/or, a resource unlocking command.

9. A system for automatic switching, comprising at least one working entity and one protection entity; wherein, the working entity and the protection entity comprise a plurality of nodes; wherein:
the nodes on the protection entity are configured to: judge a status of the working entity when detecting or being notified by other nodes of a failure of a link or node resources, and/or, protection resources are occupied by higher priority services, and/or, an external command is received, and switch to the working entity when the status of the working entity meets a predetermined condition.

10. The system according to claim 9, wherein, meeting the predetermined condition comprises that:
the status of the working entity is better than a status of the protection entity, or, a status priority of the protection entity is higher than a status priority of the working entity, or, the status of the working entity is normal.

11. The system according to claim 9, wherein, the nodes on the working entity are configured to: judge the status of the protection entity when detecting or being notified by other nodes of a failure of a link or node resources, and/or, the external command is received, and switch to the protection entity when the status of the protection entity meets a second predetermined condition.

12. The system according to claim 11, wherein, the status of the protection entity meeting the second predetermined condition comprises that:
the status of the protection entity is better than the status of the working entity, or, a status priority of the working entity is higher than a status priority of the protection entity, or, the status of the protection entity is normal.

13. The system according to claim 9, wherein, the nodes on the protection entity or the working entity are further configured to: notify other nodes when detecting or being notified of a status change, wherein the status change comprises one or a combination of the following:
a failure of a link or node resources; resources being occupied by other higher priority services; a failure of a link or node resources clear; other higher priority services releasing the occupied resources; and receiving an external command.

14. The system according to claim 13, wherein, notifying other nodes comprises:
notifying other nodes on a same protection entity or working entity.

15. The system according to claim 13, wherein, an intermediate node on the protection entity is further configured to: release or occupy corresponding resources when detecting or being notified by other nodes of a status change occurring on a link or a node, to make the resources become available or unavailable.

16. The system according to claim 9, 11 or 13, wherein, the external command comprises a resource locking command, and/or, a resource unlocking command.
